# EUROPEAN PATENT APPLICATION

(11) **EP 4 458 229 A1**
(43) Date of publication of application: **06.11.2024**
(21) Application number: 22921331.9
(22) Date of filing: 28.04.2022
(51) Int. Cl.: A47J 43/046, A47J 43/07

(54) **FOOD PROCESSOR, CONTROL METHOD AND DEVICE THEREFOR, AND READABLE STORAGE MEDIUM**

(30) Priority: 24.01.2022 CN 202210077552
(71) Applicant: Guangdong Midea Consumer Electric Manufacturing Co., Ltd., Shunde District Foshan, Guangdong 528311 (CN)
(72) Inventor: FU, Zhengting, Foshan, Guangdong 528311 (CN); XU, Jianfei, Foshan, Guangdong 528311 (CN); GUO, Houcai, Foshan, Guangdong 528311 (CN); OU, Jiebin, Foshan, Guangdong 528311 (CN); TAO, Xuefa, Foshan, Guangdong 528311 (CN); WU, Bo, Foshan, Guangdong 528311 (CN)
(74) Representative: Ran, Handong
(86) International application number: PCT/CN2022/089754
(87) International publication number: WO 2023/137899

(57) **Abstract**

Provided are a control method and control device for a food processor, a readable storage medium and a food processor. The food processor comprises a cup body, a first flow channel and a second flow channel that are communicated with the cup body, and a switch member capable of opening and closing the first flow channel and/or the second flow channel; a filter member is provided on a flow path of the first flow channel, and a stirring device is provided in the cup body. The control method for the food processor comprises: when a pulping process is finished, controlling the switch member to close the second flow channel and open the first flow channel to enable the cup body to be in communication with the outside, so as to discharge a pulp in the cup body (102); and controlling the switch member to close the first flow channel and the second flow channel, injecting a cleaning medium into the cup body, and controlling the switch member to open the second flow channel, or controlling the switch member to open the first flow channel and the second flow channel so as to discharge the cleaning medium in the cup body (104).

## Description

### CROSS-REFERENCE TO RELATED APPLICATIONS

This application claims priority to Chinese Patent Application No. 202210077552.7 filed with China National Intellectual Property Administration on January 24, 2022 and entitled "FOOD PROCESSOR, CONTROL METHOD AND DEVICE THEREFOR, AND READABLE STORAGE MEDIUM", which is incorporated herein by reference in its entirety.

### FIELD

The present application relates to the field of household appliances, and particularly relates to a control method and a control device of a food processor, a computer readable storage medium and a food processor.

### BACKGROUND

In the related art, there will be impurities in the process of stirring soybean milk, and the impurities will remain in the cup after filtering the soybean milk, and needs to be cleaned manually, but the efficiency of manual cleaning is low and the cleaning effect cannot be guaranteed.

### SUMMARY

The present application aims to solve at least one of the problems in the prior art.

Thus, the first aspect of the present application provides a control method for a food processor.

The second aspect of the present application provides a control device of a food processor.

The third aspect of the present application provides a computer readable storage medium.

The fourth aspect of the present application provides a food processor.

The fifth aspect of the present application provides a food processor.

In view of this, the first aspect of the present application provides a control method for a food processor, and the food processor comprises a cup, a first flow channel and a second flow channel that are communicated with the cup, and a switch member capable of opening and closing the first flow channel and/or the second flow channel; a filter member is provided on a flow path of the first flow channel, and a stirring device is provided inside the cup; the control method comprises: when a pulping process is finished, controlling the switch member to close the second flow channel and open the first flow channel to allow communication between the cup and the outside, to discharge the pulp from the cup; and controlling the switch member to close the first flow channel and the second flow channel, injecting a cleaning medium into the cup, and controlling the switch member to open the second flow channel, or controlling the switch member to open the first flow channel and the second flow channel to discharge the cleaning medium from the cup.

It should be indicated that the executing entity of the embodiment provided in the present application can be a control device of a food processor, and the control device can be a function device and/or a function entity in the food processor, and it can be determined according to actual needs in use; in order to more clearly describe the control method for a food processor provided in the present application, in the following method, it is exemplarily illustrated that the executing entity of the control method for a food processor is the control device of the food processor.

The present application provides a control method for a food processor, and the food processor comprises a cup, a first flow channel, a second flow channel, a switch member, a filter member and a stirring device. And the first flow channel and the second flow channel communicate with the cup, the liquid inside the cup can be discharged to the outside through the first flow channel and the second flow channel. The switch member is provided at the first flow channel and the second flow channel, and can open or close the first flow channel and the second flow channel. The filter member is provided at the first flow channel, the filter member can filter the liquid flowing through the first flow channel, prevent the impurities in the liquid from being discharged out directly through the first flow channel and then avoid affecting the taste of the pulp. The stirring device is provided inside the cup, and can stir the liquid in the cup.

In an embodiment, when the execution of the pulping process of the food processor is finished, the control device of the food processor controls the switch member to close the second flow channel and open the first flow channel, and the pulp can be discharged to the outside through the first flow channel. When the pulp flows through the filter member at the first flow channel, the filter member will separate the impurities in the pulp from the pulp, this decreases the remaining amount of the impurities in the discharged pulp, and the drinking taste of the pulp is improved.

For the convenience of subsequent description of the impurities, an impurity with a volume greater than the volume of a filter hole is called a first impurity, and an impurity with a volume less than the volume of the filter hole is called a second impurity.

Furthermore, when the pulp in the cup is completely discharged to the outside, the control device of the food processor controls the switch member to close the first flow channel and the second flow channel, and injects a cleaning medium of a first preset capacity into the cup; and the cleaning medium can remove the first impurities adhered to the inner wall of the cup and the filter member, and blend the first impurities into the cleaning medium, and the first impurities in the cup can be removed under the action of the cleaning medium, this is beneficial for subsequent cleaning operation of the cup and achieves the removal of the first impurities in the cup. In addition, in the process of removing the first impurities, a portion of the second impurities will be removed correspondingly, and most of the impurities in the cup are removed.

Furthermore, the control device of the food processor controls the switch member to open the second flow channel, and it should be indicated that the second flow channel is not provided with the filter member, opening the second flow channel can smoothly discharge the first impurities, the second impurities and the cleaning medium to the outside, thus this prevents blocking the first impurities in the cup, and improves the effect of removing the impurities. Or, the control device can control the switch member to open both the first flow channel and the second flow channel, and this will accelerate discharging the cleaning medium, the first impurities are discharged through the second flow channel, the second impurities are discharged through the first flow channel, then the time of discharging the impurities is shortened, and the efficiency of discharging the impurities is improved; and thus, the operation of discharging most of the impurities in the cup is accomplished, and the cleaning for the cup is achieved.

And injecting a cleaning medium of a first preset capacity may be half or two thirds of the volume of the cup, so to ensure that the cleaning medium can remove the impurities at most positions of the cup, and the cleaning effect of the cup is ensured.

The control method for a food processor provided by the present application can improve the drinking taste of the pulp by filtering the pulp and separating the pulp from the impurities. At the same time, by injecting the cleaning medium into the cup, the first impurities and a portion of the second impurities remaining in the cup and at the filter member are removed by the cleaning medium, a self-cleaning function of the cup with the filter member is achieved, the incomplete cleaning of the cup due to the arrangement of filter member or the need for the further operation of manually cleaning the impurities in the cup is avoided, and the cleaning efficiency and the cleaning effect are improved.

Furthermore, when the cleaning medium is injected into the cup, a spraying device can be configured to spray the medium into the cup, or the cleaning medium can further be injected into the cup through an ordinary injecting method.

In addition, the control method for a food processor in the above embodiment provided by the present application can further comprise the following additional features.

In a possible design, before discharging the pulp from the cup, the above control method further comprises: controlling the stirring device to operate for a first preset duration at a first preset rotation speed.

In the design, the control device of the food processor controls the stirring device to rotate in the first preset duration, and controls the stirring device to rotate at the first preset rotation speed, and through reasonably disposing the first preset duration, the stirring device is enabled to continuously stir the pulp in the cup, this accelerates the speed of discharging the pulp, and improves the efficiency of discharging the pulp. The control device of the food processor controls the stirring device to rotate at the first preset rotation speed, and this avoids the accumulation of the impurities in the pulp at the filter member and then avoids blocking the filter member, and thus the filtering effect is ensured while the speed of discharging the pulp is improved, and it is ensured that the pulp in the cup is quickly discharged, and the efficiency of discharging the pulp is improved.

Understandably, if the first preset duration is relatively short, the stirring device cannot continuously stir the pulp inside the cup, this will reduce the speed of discharging the pulp to the outside, and there is further a risk that the impurities in the pulp will block the filter member, and then the efficiency and effect of discharging the pulp cannot be ensured. If the first preset duration is relatively long, it will increase the power consumption of the stirring device, and the operating cost is increased.

Understandably, the rotation speed of the stirring device is disposed to be the first preset rotation speed, and the stirring device can quickly stir the pulp inside the cup, the pulp is quickly discharged to the outside under the action of the stirring device, and the impurities in the pulp will roll irregularly with the stirring device to prevent the impurities from falling into the filter member and blocking the filter member, and thus the speed and effect of discharging the pulp are ensured. If the first preset rotation speed is relatively low, it will reduce the stirring effect to the pulp inside the cup, reduce the speed of discharging the pulp, and cannot stir the first impurities in the pulp, and this causes the first impurities in the pulp to block the filter member, and prolongs the entire time of discharging the pulp. If the first preset rotation speed is relatively high, firstly it will increase the power consumption of the stirring device and increase the operating cost, and secondly, it will increase the noise generated during the stirring of the stirring device.

In a possible design, prior to controlling the switch member to open the second flow channel or controlling the switch member to open the first flow channel and the second flow channel, the method further comprises: controlling the stirring device to stir for a second preset duration.

In the design, the control device of the food processor controls the stirring device to continuously stir the cleaning medium inside the cup within the second preset duration, and the first impurities inside the cup is removed by the cleaning medium and are blended with the cleaning medium; when the cleaning medium is discharged, the first impurities can be discharged together, and the first impurities remaining in the cup are discharged first, which facilitates the subsequent cleaning operation of the cup, and under the action of the stirring device, the speed of discharging the cleaning medium can be accelerated, the cleaning medium in the cup is quickly discharged, and thus the efficiency is improved.

Understandably, if the second preset duration is relatively short, the stirring device cannot fully stir the cleaning medium, which is not conducive to removing the first impurities and the second impurities remaining on the filter member and the inner wall of the cup, and the cleaning effect cannot be guaranteed. If the second preset duration is relatively long, it will increase the power consumption of the stirring device, and the operating cost is increased.

It should be indicated that the stirring device injects the cleaning medium into the cup for the first time when the cleaning medium is injected into the cup for the first time, that is, after the food processor discharges the pulp, the control device controls the stirring device to run at the first preset rotation speed within the first preset duration.

Understandably, after the food processor discharges the pulp to the outside, there will be a large amount of pulp impurities in the cup, at the moment, the cleaning medium is injected into the cup for the first time, and the control device controls the stirring device to perform the stirring operation. Under the stirring of the stirring device, the cleaning medium removes the main first impurities and a portion of the second impurities from the cup, allowing them to blend with the cleaning medium, and then, when the cleaning medium is discharged, the impurities are discharged together to the outside, and thus, most of the impurities in the cup are removed, and this helps the following operation of further cleaning the impurities in the cup.

In a possible design, the food processor further comprises a heating member, and after discharging the cleaning medium from the cup, the method further comprises: controlling the switch member to close the first flow channel and the second flow channel and injecting the cleaning medium into the cup once again; controlling a heating member to heat to a first target temperature and controlling the stirring device to conduct a stirring operation; and controlling the switch member to open the first flow channel and/or the second flow channel, to discharge the cleaning medium from the cup.

In the design, the food processor further comprises the heating member, and the heating member can heat the pulp or the cleaning medium in the cup. When the heating member heats the cleaning medium, the temperature of the cleaning medium can be raised to a designated temperature, the high temperature cleaning medium can help remove the impurities remained on the inner wall of the cup, assist the stirring device to stir the high temperature cleaning medium and can further clean the impurities in the cup.

Furthermore, when the cleaning medium injected into the cup for the first time is discharged, the cleaning medium of a second preset capacity is injected into the cup for the second time, the control device controls the stirring device to start to stir the cleaning medium injected for the second time in the cup and clean the second impurities on the inner wall of the cup and the filter member which easily fall off, i.e., the impurities in the cup are cleaned for the first time, and the possibly remaining first impurities and the second impurities which easily fall off are removed first, and this is a preparation for the following cleaning to the impurities adhered to the inner wall of the cup and the filter member.

And the cleaning medium of the second preset capacity can be less than or equal to a half of the volume of the cup.

Furthermore, the cleaning medium of a third preset capacity can be injected into the cup for the third time, and meanwhile, the control device controls the heating member to start, the heating member heats the cleaning medium inside the cup and heats it to the first target temperature, and the cleaning medium can soften the impurities on the inner wall of the cup and at the filter member, and thus the impurities can fall off more easily. The stirring device stirs the cleaning medium and the cleaning medium creates a vortex inside the cup, as the impurities are softened under the action of temperature and can fall off easily, under the impact of the cleaning medium, the impurities are washed off and blended with the cleaning medium, and the impurities on the inner wall of the cup and the filter member are removed, i.e., the impurities inside the cup are cleaned for the second time. Meanwhile, the first impurities inside the cup can further be separated into the second impurities under the high temperature and the impact of the cleaning medium. After the continuous stirring of the stirring device for a period of time, the control device controls the stirring device to stop the stirring operation, and controls the switch member to open the first flow channel and/or the second flow channel, then the cleaning medium is discharged to the outside through the first flow channel and/or the second flow channel, and furthermore, the cleaning operation of the cup is accomplished.

Understandably, as the impurities generated after cleaning the cup are mainly the second impurities and the volume of the second impurity is less than the volume of the filter hole in the filter member, no matter the first flow channel is opened or the second flow channel is opened, the remained impurities in the cup can be discharged, and apparently, when both the first flow channel and the second flow channel are opened simultaneously, the efficiency and effect of discharging the cleaning medium are better.

In a possible design, prior to controlling the heating member to heat to the first target temperature, the method further comprises: controlling the stirring device to stir for a third preset duration.

In the design, after injecting the cleaning medium into the cup for the second time, the stirring device is controlled to rotate within the third preset duration; through reasonably disposing the third preset duration, the stirring device can continuously stir the cleaning medium, and the cleaning medium can continuously clean the impurities inside the cup, and this helps ensure the cleaning effect inside the cup.

It needs to be understood that after controlling the stirring device to stir for the third preset duration, the cleaning medium can be injected into the cup for the third time, and the cleaning medium inside the cup is sufficient, and in the following process of heating and stirring the cleaning medium, the sufficient cleaning medium washes the cup wall of the cup, and a better cleaning effect is achieved.

Furthermore, the stirring device can continuously or intermittently stir during stirring. Understandably, when the control device controls the above stirring device to perform the stirring operation, the stirring device can continuously or intermittently stir. When the stirring device continuously stirs the cleaning medium inside the cup, it can keep the cleaning medium swirling, and the cleaning medium can continuously impact the impurities adhered to the inner wall of the cup and the filter member, and then the removing effect of the impurities is improved and the cleaning effect of the cup is ensured. When the stirring device intermittently stirs the cleaning medium inside the cup, it can prevent the cleaning medium from overflowing the cup, and the intermittent operation of the stirring device can reduce power consumption and lower user's use cost.

In a possible design, after discharging the cleaning medium from the cup, the method further comprises: executing a first cleaning process N times, and N is a positive integer; and the first cleaning process comprises: controlling the switch member to close the first flow channel and the second flow channel and injecting the cleaning medium into the cup once again; controlling the stirring device to conduct the stirring operation; and controlling the switch member to open the first flow channel and/or the second flow channel, to discharge the cleaning medium from the cup.

It should be noted that the first cleaning process mentioned above can be executed after the cleaning medium is injected into the cup for the first time, then stirred and discharged, and can further be executed after the cleaning medium is injected into the cup for the second time, then heated, stirred and discharged. The executing order can be set according to the user's setting or actual situations.

In the design, after discharging the cleaning medium from the cup, the first cleaning process is executed once again, and the number of the executing times of the first cleaning process is N, and N is a positive integer, executing the first cleaning process for N times in a cyclical way can ensure the effect of removing the impurities from the cup. The number of the executing times of the first cleaning process mentioned above can be set by default according to user needs, or selected by the user based on the impurities remained in the cup. Furthermore, the above first cleaning process comprises that the control device of the food processor controls the switch member to close the first flow channel and the second flow channel to prevent the cleaning medium from flowing out of the first flow channel and the second flow channel. The cleaning medium is injected into the cup, and meanwhile, the control device of the food processor controls the stirring device to start to stir the cleaning medium, and the cleaning medium forms a vortex and removes the impurities on the inner wall of the cup and the filter member, and then the cleaning of the cup is achieved. After the stirring device continues stirring for a period of time, the control device stops the stirring of the stirring device, the control device of the food processor controls the switch member to open the first flow channel and/or the second flow channel to discharge the cleaning medium to the outside, to complete the execution of the first cleaning process.

Exemplarily, after the cleaning medium in cup is discharged, the first cleaning process is executed for three times. At the moment, the food processor begins to execute the first cleaning process, the control device of the food processor controls the switch member to close the first flow channel and the second channel, and injects the cleaning medium into the cup, and at the same time, the control device of the food processor controls the stirring device to operate and conduct the stirring operation to the cleaning medium inside the cup, and the cleaning medium forms a vortex to remove the impurities on the inner wall of the cup and the filter member, and then the cleaning of the cup is achieved. After the stirring device continues stirring for a period of time, the stirring operation of the stirring device is stopped, the control device of the food processor controls the switch member to open the first flow channel and/or the second flow channel to discharge the cleaning medium mixed with the impurities to the outside to complete the cleaning of the cup and complete the first cleaning process. The above process is the steps for executing the first cleaning process once, and the steps of the first cleaning process is repeated twice to complete the instruction of executing the first cleaning process three times. It should be noted that the greater the number N of the executing times of the first cleaning process is, the better the cleaning effect to the cup is, and a user can change the value of N accordingly based on the amount of the impurities in the cup and the expected cleaning level of the cup.

It should be noted that the impurities generated after cleaning the cup are mainly the second impurities, and the volume of the second impurity is less than the volume of the filter hole in the filter member, and therefore, no matter the first flow channel is opened or the second flow channel is opened, the impurities remained on the cup can be discharged, and apparently, when the first flow channel and the second flow channel are opened simultaneously, the efficiency and the effect of discharging the cleaning medium are better.

It can be understood that the residues in the cup are mainly the second impurities after the preceding several cup washing processes. By running the first cleaning process for N times, the cleaning effect inside the cup can be improved, and the amount of the impurities inside the cup is reduced significantly, the cleaning degree of the cup is improved, and the user's use requirements are met.

In a possible design, before the pulping process is finished, the method further comprises: in response to the operation of starting to make the pulp, controlling the switch member to close the first flow channel and the second flow channel, and injecting a liquid into the cup containing materials; controlling the heating member to heat the liquid to a second target temperature and controlling the stirring device to perform a stirring operation; injecting the liquid into the cup once again and controlling the heating member to heat the liquid to a third target temperature, and confirming the completion of the pulping process.

In the design, the pulping process can be divided into three working stages, and the pulping process is accomplished through the three working stages, and the three working stages are as follows.

In the first working stage, the control device of the food processor responds to the instruction of starting making the pulp and controls the switch member to close the first flow channel and the second flow channel to prevent the liquid to be injected from flowing out of the first flow channel and the second flow channel; after the first flow channel and the second flow channel are closed, the liquid is injected into the cup containing the materials, and the materials are mixed with the liquid, and this makes a preparation for the pulping.

In the second working stage, the control device of the food processor controls the heating member to heat the liquid in the cup to the second target temperature, this causes the temperature of the liquid to rapidly rise, and at the same time, the stirring device is controlled to conduct stirring operation and stir the materials and the liquid in the cup, and the materials and the liquid are fully blended and the pulp and the materials are matured.

In the third working stage, the control device of the food processor controls the stirring device to continuously stir for a period of time, then the liquid is injected into the cup once again, and the pulp reaches an appropriate concentration, and the heating member is controlled to continue heating the liquid in the cup and heat the liquid in the cup to the third target temperature. When the temperature of the liquid in the cup reaches the third target temperature, the pulping is completed, and the pulping process ends.

Through the three pulping stages, the pulping operation is accomplished. In the first stage of pulping, the liquid is injected into the cup containing the materials, and the materials are blended with the liquid to make the preparation of the pulping. In the second stage of pulping, the materials and the liquid are heated and thoroughly stirred, and the materials and the liquid are fully blended to form a matured pulp. In the third stage of pulping, the liquid is added to the cup once again to dilute the pulp, and the concentration of the pulp is suitable for users to drink, and thus the drinking taste of the pulp is improved, and the effect of pulping is ensured.

Furthermore, the value range of the second target temperature is greater than or equal to 95°C.

Understandably, disposing the value range of the second target temperature to be greater than or equal to 95 °C can effectively soften the materials, and the materials are fully blended with the liquid under the action of the stirring device, and this ensures the formation of the pulp, and improves the efficiency and effect of the pulping. If the second target temperature is too low, it does not help the fully blending of the materials and the fluid, and increases the duration of the blending of the materials and the fluid, and prolongs the overall pulping duration. Thus, the value range of the second target temperature is disposed to be greater than or equal to 95°C.

Furthermore, the value range of the third target temperature is 100 °C.

Understandably, the value range of the third target temperature is disposed to be 100°C, at the moment, the pulp inside the cup is heated to boil, and the boiling pulp can quickly be blended with the injected liquid to dilute the concentration of the pulp and the concentration of the pulp is reduced to be suitable for users to drink.

In a possible design, before controlling the heating member to heat the liquid to the second target temperature, the method further comprises: controlling the stirring device to operate intermittently at a second preset rotation speed.

In the design, before controlling the heating member to heat the liquid in the cup to the second target temperature, the stirring device is controlled to operate intermittently at the second preset rotation speed, firstly, it can ensure sufficient stirring of the liquid inside the cup, and the liquid is fully blended with the materials, and secondly, it can reduce the power consumption of the stirring device and lower users' use cost.

The second aspect of the present application provides a control device of a food processor, and the food processor comprises a cup, a first flow channel and a second flow channel that are communicated with the cup, and a switch member capable of opening and closing the first flow channel and/or the second flow channel; a filter member is provided on a flow path of the first flow channel, and a stirring device is provided inside the cup; and the control device comprises: a processing unit for controlling the switch member to close the second flow channel and open the first flow channel to allow communication between the cup and the outside to discharge the pulp from the cup when a pulping process is finished; and the processing unit is further configured for injecting a cleaning medium into the cup and controlling the stirring device to conduct a stirring operation, and controlling the switch member to open the first flow channel and the second flow channel to discharge the cleaning medium from the cup.

The control device of a food processor provided by the present application is used for a food processor, and the food processor comprises the cup, the cup communicates with the first flow channel and the second flow channel, and the liquid in the cup can be discharged to the outside through the first flow channel and the second flow channel. The above food processor is further provided with the switch member, and the switch member can open or close the first flow channel and the second flow channel. And the filter member is provided on the flow path of the first flow channel, the filter member can filter the fluid flowing through the first flow channel, and the impurities in the liquid is separated from the liquid, and the filtering function to the liquid is achieved. The cup is provided with the stirring deice, and the stirring device can conduct the stirring operation.

Furthermore, after the pulping process is finished, the processing unit controls the switch member to close the second flow channel and open the first flow channel to allow communication between the cup and the outside, and then the liquid in the cup can be discharged to the outside through the first flow channel. When the fluid flows through the first flow channel, the impurities in the liquid is separated from the liquid when passing through the filter member of the first flow channel, the impurities are retained in the cup, and thus the filtering of the pulp is finished.

Furthermore, when the pulp in the cup is discharged to the outside, the processing unit controls the switch member to close the first flow channel and injects the cleaning medium into the cup; the processing unit controls the stirring device to perform stirring operation; the cleaning medium in the cup forms a vortex under the action of the stirring device, and the impurities fall off and are blended with the cleaning medium under the impact of the cleaning medium. After the stirring device continues stirring for a period of time, the stirring operation of the stirring device is stopped, the switch member is controlled to open the first flow channel and the second flow channel, and the cleaning medium inside the cup is discharged, and thus the cleaning process is accomplished.

In the present application, the switch member is controlled to close the second flow channel and open the first flow channel through the processing unit to discharge the pulp to the outside through the first flow channel, the pulp is filtered by the filter member at the first flow channel, the separation of the pulp from the impurities is achieved, and the filtering effect of the pulp is ensured. In addition, the processing unit further controls the switch member to close the first flow channel, controls the stirring device to stir the cleaning medium inside the cup, and the impurities in the cup are removed, the cleaning effect of the cup is achieved, bacterial growth is reduced, and the cleaning degree of the cup is significantly improved.

The third aspect of the present application provides a computer readable storage medium, a program or instruction is stored in the computer readable storage medium, and when the program or instruction is executed by a processor, the steps of the control method for a food processor of any possible design in the first aspect are achieved. Therefore, the computer readable storage medium has all the beneficial effects of the control method for a food processor of any possible design in the first aspect.

The above-mentioned computer readable storage medium can be a read only memory (ROM), a random access memory (RAM), a magnetic disk or an optical disc, etc.

The fourth aspect of the present application provides a food processor, comprising: the control device of a food processor in the second aspect; and/or the computer readable storage medium provided in the third aspect, and therefore, it has all the beneficial effects of the control device of a food processor in the second aspect and/or the computer readable storage medium in the third aspect, which are not repeated herein.

The fifth aspect of the present application provides a food processor, which can achieve the control method for a food processor provided in the first aspect, and the food processor comprises a cup, a draining pipe, a switch member and a filter member. The cup is provided with a first draining port and a second draining port; the draining pipe can communicate with the first draining port and/or the second draining port, a first flow channel is formed when the draining pipe communicates with the first draining port, and a second flow channel is formed when the draining pipe communicates with the second draining port; the switch member can conduct or block the communication between the first draining port and/or the second draining port with the draining pipe; and the filter member is provided on the flow path of the first flow channel.

The food processor provided in the fifth aspect of the present application comprises the cup, the draining pipe, the switch member and the filter member. And the cup is provided with the first draining port and the second draining port, and the liquid in the cup can be discharged to the outside through the first draining port and the second draining port.

Furthermore, the draining pipe communicates with the first draining port and/or the second draining port; when the draining pipe communicates with the first draining port, the draining pipe and first draining port form the first flow channel, and the liquid in the cup can be discharged to the outside through the first flow channel. When the draining pipe communicates with the second draining port, the draining pipe and the second draining port form the second flow channel, and the liquid in the cup can be discharged to the outside through the second flow channel. And the filter member is provided on the flow path of the first flow channel, and the filter member can filter the liquid flowing through the first flow channel, and separate the impurities from the liquid, and thus the filtering of the pulp is achieved.

Exemplarily, when the food processor completes executing the pulping process and needs to discharge the pulp, the pulp is discharged through the first flow channel; when the pulp flows through the filter member at the first flow channel, the filter member separates the impurities from the liquid, the impurities in the liquid are left in the cup, the amount of the impurities in the discharged pulp is decreased, and furthermore, the filtering effect of the pulp is ensured and the drinking taste of the pulp is achieved. When the food processor completes the cleaning process, the cleaning medium is discharged through the first flow channel and/or second flow channel, the impurities mixed in the cleaning medium can be discharged, the impurities remained in the cup is decreased, and the cleaning effect of the cup is improved.

Furthermore, the food processor provided by the embodiment of the present application is further provided with a switch member, the switch member can conduct or block the first draining port and/or the second draining port, and the communication between the first draining port and/or the second draining port with the draining pipe is switched, and the switch member further controls whether the liquid in the cup can be discharged through the first draining port and/or the second draining port.

In an embodiment, the switch member can be provided on the draining pipe.

In a possible design, the food processor further comprises: a support pipe, communicating with the draining pipe, and the switch member is movable within the support pipe; and when the switch member moves to a first position, the first flow channel and the second flow channel are blocked from communicating with the outside; when the switch member moves to a second position, the first flow channel communicates with the outside, the communication between the second flow channel and the outside is blocked; when the switch member moves to a third position, the first flow channel and the second flow channel communicate with the outside.

In the design, the support pipe communicates with the draining pipe, the switch member can do reciprocating motion inside the support pipe to conduct or block the first flow channel and the second flow channel. When the switch member moves to the first position inside the support pipe, both the first flow channel and the second flow channel are blocked from communicating with the outside, and the liquid inside the cup cannot be discharged to the outside through the first flow channel and the second flow channel. In general, in the case that both the first flow channel and the second flow channel are blocked from communicating with the outside, the food processor may be in the pulping stage or in the stage of using the cleaning medium to wash the cup, then the pulp or the cleaning medium are kept inside the cup and do not leak out of the cup.

Furthermore, when the switch member moves to the second position inside the support pipe, the first flow channel communicates with the outside, the communication between the second flow channel and the outside is blocked by the switch member, and at the moment, the liquid in the cup can only be discharged to the outside through the first flow channel. Generally, in the case that the first flow channel communicates with the outside and the communication between the second flow channel and the outside is blocked by the switch member, the food processor may be in a stage of discharging the pulp, and then, the prepared pulp needs to be filtered through the filter member in the first flow channel and is discharged out of the cup of the food processor.

Furthermore, when the switch member moves to the third position inside the support pipe, both the first flow channel and the second flow channel communicate with the outside, and then, the liquid in the cup can be discharged to the outside through the first flow channel and the second flow channel. Generally, in the case that both the first flow channel and the second flow channel communicate with the outside, the food processor may be in a cleaning stage in which the cleaning medium mixed with the impurities are discharged.

It can be understood that the communicating state of the first flow channel and the second flow channel with the outside can be controlled through the moving of the switch member inside support pipe, and the food processor can select different flow channels to discharge the liquid when executing different program instructions, and thus the functionality of the food processor is improved.

In a possible design, the second draining port communicates with the draining pipe, the second draining port and the first draining port are arranged successively along the moving direction of the switch member, and the second draining port is closer to the inlet of the cup compared with the first draining port; and when the switch member moves to the first position, the switch member blocks the first draining port and the second draining port; when the switch member moves to the second position, the switch member opens the first draining port and blocks the second draining port; when the switch member moves to the third position, the switch member opens the first draining port and the second draining port.

In the design, the second draining port communicates with the draining pipe, the second draining port and the first draining port are arranged successively along the moving direction of the switch member, and the position of the second draining port is closer to the inlet of the cup compared with the position of the first draining port. Exemplarily, during the process that the switch member moves from top to bottom along the height direction of the cup, it first passes through the second draining port, and then passes through the first draining port. During the process that the switch member moves from bottom to top along the height direction of the cup, it first passes through the first draining port and then passes through the second draining port.

Furthermore, when the switch member moves to the first position, both the first draining port and the second draining port are blocked from communicating with the outside, the communications between the first draining port, the second draining port and the draining pipe are blocked by the switch member, and the communications between the first flow channel and the second flow channel and the outside are further blocked, and the liquid in the cup cannot be discharged to the outside through the first draining port and the second draining port. When the switch member moves to the second position, the switch member opens the first draining port, the first draining port communicates with the draining pipe, and then the first flow channel communicates with the outside; the communication between the second draining port and the outside is blocked by the switch member, and at the moment, the liquid inside the cup can only be discharged to the outside through the first draining port. When the switch member moves to the third position, both the first draining port and the second draining port communicate with the outside, and at the moment, the first draining port and the second draining port in the cup communicate with the draining pipe, and thus the first flow channel and the second flow channel are formed, and the liquid in the cup can be discharged to the outside.

In a possible design, the food processor further comprises a driving motor, connected to the switch member and configured for driving the switch member to move within the support pipe.

In the design, the food processor further comprises the driving motor which is connected to the switch member, and the driving motor can drive the switch member to move within the support pipe, and the switch member can conduct or block the first flow channel and/or the second flow channel, and further control the communication between the cup with the outside.

In a possible design, the support pipe is internally provided with a first thread, and the switch member is provided with a second thread compatible with the first thread, and the switch member is movable within the support pipe via the second thread.

In the design, the support pipe is internally provided with the first thread, and the switch member is provided with the second thread, the first thread is compatible with the second thread, and the switch member can move or be locked within the support pipe via the second thread. Understandably, through controlling the switch member to rotate in the support pipe, a displacement motion of the switch member in the support pipe can be achieved, and furthermore, the switch member can conduct or block the first flow channel and/or the second flow channel.

Through providing the first thread and the second thread, the motion of the switch member in the support pipe is more accurate, and the switch member is movable within the support pipe through the threads, then the locking at a designated position can be achieved, and the conducting or blocking effect of the switch member is improved.

In a possible design, the bottom portion of the cup protrudes outward to form an accommodating groove, and the first draining port is provided in a portion of the cup that forms the accommodating groove; the filter member is provided in the accommodating groove and located between the first draining port and the second draining port.

In the design, the bottom portion of the cup protrudes outward to form the accommodating groove, and the first draining port is provided in a portion of the cup that forms the accommodating groove, i.e., at least a portion of the accommodating groove is the first draining port. The filter member is provided at the accommodating groove, and the accommodating groove can control and fix the filter member, and the filter member is fixed at a relative position of the cup; when the liquid passes through the filter member, it ensures that the filter member is always fixed at the accommodating groove.

Furthermore, the filter member is located between the first draining port and the second draining port. The large impurities that have been filtered by the filter member can be retained above the filter member, and ideally, the large impurities can be located at the second draining port. In this way, when the cleaning medium is configured to clean the cup, the large impurities can be directly discharged out of the cup through the second draining port.

Furthermore, the area of the accommodating groove is greater than that of the first draining port, and the liquid in the cup can be filtered sufficiently by the filter member when passing through the filter member provided at the accommodating groove, and this can prevent the impurities in the liquid from flowing out directly through the first draining port, and the filtration efficiency of the liquid is ensured.

In a possible design, the food processor further comprises: a storage tank communicating with the cup and configured for injecting the liquid into the cup.

In the design, the food processor further comprises the storage tank, and the liquid is accommodated in the storage tank. The storage tank communicates with the cup, and the liquid in the storage tank can be injected into the cup, to meet the needs of the liquid in the cup.

Furthermore, the liquid accommodated in the storage tank is water. The water is injected into the cup from the storage tank and the cup can be cleaned with water.

### BRIEF DESCRIPTION OF THE DRAWINGS

FIG. 1 is the first schematic flow chart of a control method for a food processor according to an embodiment of the present application;
FIG. 2 is the second schematic flow chart of a control method for a food processor according to an embodiment of the present application;
FIG. 3 is the third schematic flow chart of a control method for a food processor according to an embodiment of the present application;
FIG. 4 is a block diagram of the structure of a control device of a food processor according to an embodiment of the present application;
FIG. 5 is the first schematic view of the structure of a food processor according to an embodiment of the present application;
FIG. 6 is a schematic view of opening a first flow channel and closing a second flow channel in a food processor according to an embodiment of the present application;
FIG. 7 is a schematic view of opening a first flow channel and a second flow channel in a food processor according to an embodiment of the present application;
FIG. 8 is the second schematic view of the structure of a food processor according to an embodiment of the present application;
FIG. 9 is the first sectional view of a food processor according to an embodiment of the present application;
FIG. 10 is a schematic view of a filter member of a food processor according to an embodiment of the present application;
FIG. 11 is the second sectional view of a food processor according to an embodiment of the present application; and
FIG. 12 is the third schematic view of the structure of a food processor according to an embodiment of the present application.

And the corresponding relationships between the reference signs and the component names are as follows:
100: cup, 102: draining pipe, 104: first draining port, 106: second draining port, 108: first flow channel, 110: second flow channel, 112: switch member, 114: filter member, 116: support pipe, 118: accommodating groove, 120: storage tank.

### DETAILED DESCRIPTION OF THE APPLICATION

To more clearly understand the above purposes, features and advantages of the present application, the present application will be further detailed hereinafter in combination with the accompanying drawings and embodiments. It should be indicated that in the case of no conflict, the embodiments of the present application and the features in the embodiments of the present application can be combined with each other.

Many details are illustrated in the following description for the convenience of a thorough understanding to the present application, but the present application can further be implemented using other embodiments other than these described herein. Therefore, the protection scope of the present application is not limited to the embodiments disclosed in the following text.

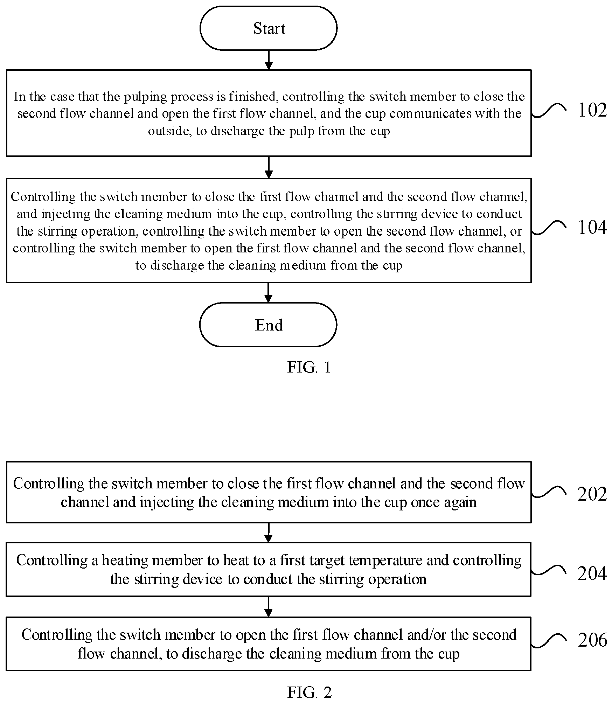

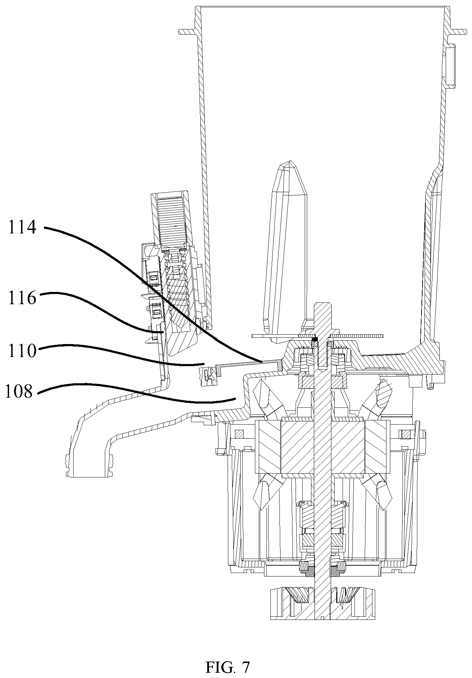

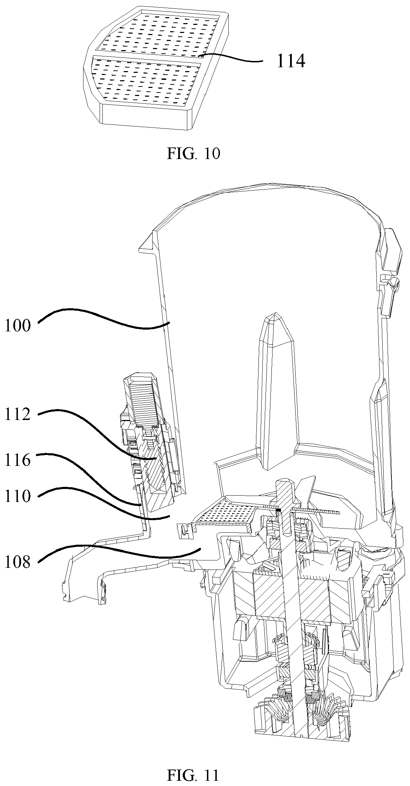

A control method for a food processor, a control device of a food processor, a computer readable storage medium and a food processor provided by some embodiments according to the present application are described in the following by referring to FIG. 1 to FIG. 12.

It should be indicated that the executing entity of the embodiment provided in the present application can be a control device of a food processor, and the control device can be a function device and/or a function entity in the food processor, and it can be determined according to actual needs in use; in order to more clearly describe the control method for a food processor provided in the present application, in the following method, it is exemplarily illustrated that the executing entity of the control method for a food processor is the control device of the food processor.

The first embodiment of the present application provides a control method for a food processor, and the food processor comprises a cup, a first flow channel, a second flow channel, a switch member, a filter member and a stirring device.

And the first flow channel and the second flow channel communicate with the cup, the liquid inside the cup can be discharged to the outside through the first flow channel and the second flow channel. The switch member is provided at the first flow channel and the second flow channel, and can open or close the first flow channel and the second flow channel. The filter member is provided at the first flow channel, the filter member can filter the liquid flowing through the first flow channel, prevent the impurities in the liquid from being discharged out directly through the first flow channel and then avoid affecting the taste of the pulp. The stirring device is provided inside the cup, and can stir the liquid in the cup.

As shown in FIG. 1, the control method for a food processor provided according to an embodiment of the present application comprises:
Step 102, in the case that the pulping process is finished, controlling the switch member to close the second flow channel and open the first flow channel, and the cup communicates with the outside, to discharge the pulp from the cup body;
Step 104, controlling the switch member to close the first flow channel and the second flow channel, and injecting the cleaning medium into the cup, controlling the stirring device to conduct the stirring operation, controlling the switch member to open the second flow channel, or controlling the switch member to open the first flow channel and the second flow channel, to discharge the cleaning medium from the cup.

The control method for a food processor provided by the present embodiment is used for a food processor, the food processor comprises the cup, the first flow channel, the second flow channel, the switch member, the filter member and the stirring device. And the first flow channel and the second flow channel communicate with the cup, the liquid inside the cup can be discharged to the outside through the first flow channel and the second flow channel. The switch member is provided at the first flow channel and the second flow channel, and can open or close the first flow channel and the second flow channel. The filter member is provided at the first flow channel, the filter member can filter the liquid flowing through the first flow channel, prevent the impurities in the liquid from being discharged out directly through the first flow channel and then avoid affecting the taste of the pulp. The stirring device is provided inside the cup, and can stir the liquid in the cup.

In an embodiment, when the execution of the pulping process of the food processor is finished, the control device of the food processor controls the switch member to close the second flow channel and open the first flow channel, and the pulp can be discharged to the outside through the first flow channel. When the pulp flows through the filter member at the first flow channel, the filter member will separate the impurities in the pulp from the pulp, this decreases the remaining amount of the impurities in the discharged pulp, and the drinking taste of the pulp is improved.

For the convenience of subsequent description of the impurities, an impurity with a volume greater than the volume of a filter hole is called a first impurity, and an impurity with a volume less than the volume of the filter hole is called a second impurity.

Furthermore, when the pulp in the cup is completely discharged to the outside, the control device of the food processor controls the switch member to close the first flow channel and the second flow channel, and injects a cleaning medium of a first preset capacity into the cup; and the cleaning medium can remove the first impurities adhered to the inner wall of the cup and the filter member, and blend the first impurities into the cleaning medium, and the first impurities in the cup can be removed under the action of the cleaning medium, this is beneficial for subsequent cleaning operation of the cup and achieves the removal of the first impurities in the cup. In addition, in the process of removing the first impurities, a portion of the second impurities will be removed correspondingly, and most of the impurities in the cup are removed.

Furthermore, the control device of the food processor controls the switch member to open the second flow channel, and it should be indicated that the second flow channel is not provided with the filter member, opening the second flow channel can smoothly discharge the first impurities, the second impurities and the cleaning medium to the outside, thus this prevents blocking the first impurities in the cup, and improves the effect of removing the impurities. Or, the control device controls the switch member to open both the first flow channel and the second flow channel, and this will accelerate discharging the cleaning medium, the first impurities are discharged through the second flow channel, the second impurities are discharged through the first flow channel, then the time of discharging the impurities is shortened, and the efficiency of discharging the impurities is improved; and thus, the operation of discharging most of the impurities from the cup is accomplished, and the cleaning for the cup is achieved.

And injecting a cleaning medium of a first preset capacity is half or two thirds of the volume of the cup, so to ensure that the cleaning medium can remove the impurities at most positions of the cup, and the cleaning effect of the cup is ensured.

The control method for a food processor provided by the present application can improve the drinking taste of the pulp by filtering the pulp and separating the pulp from the impurities. At the same time, by injecting the cleaning medium into the cup, the first impurities and a portion of the second impurities remaining in the cup and at the filter member are removed by the cleaning medium, a self-cleaning function of the cup with the filter member is achieved, the incomplete cleaning of the cup due to the arrangement of filter member or the need for the further operation of manually cleaning the impurities in the cup is avoided, and the cleaning efficiency and the cleaning effect are improved.

Furthermore, when the cleaning medium is injected into the cup, a spraying device can be configured to spray the medium into the cup, or the cleaning medium can further be injected into the cup through an ordinary injecting method.

In any of the above embodiments, furthermore, the control method provided by the present application further comprises Step 103 prior to discharging the cleaning medium in step 104:
Step 103: controlling the stirring device to operate for a first preset duration at a first preset rotation speed.

In the embodiment, the control device of the food processor controls the stirring device to rotate in the first preset duration, and controls the stirring device to rotate at the first preset rotation speed, and through reasonably disposing the first preset duration, the stirring device is enabled to continuously stir the pulp in the cup, this accelerates the speed of discharging the pulp, and improves the efficiency of discharging the pulp. The control device of the food processor controls the stirring device to rotate at the first preset rotation speed, and this avoids the accumulation of the impurities in the pulp at the filter member and then avoids blocking the filter member, and thus the filtering effect is ensured while the speed of discharging the pulp is improved, and it is ensured that the pulp in the cup is quickly discharged, and the efficiency of discharging the pulp is improved.

Understandably, if the first preset duration is relatively short, the stirring device cannot continuously stir the pulp inside the cup, this will reduce the speed of discharging the pulp to the outside, and there is further a risk that the impurities in the pulp will block the filter member, and then the efficiency and effect of discharging the pulp cannot be ensured. If the first preset duration is relatively long, it will increase the power consumption of the stirring device, and the operating cost is increased. Understandably, the rotation speed of the stirring device is disposed to be the first preset rotation speed, and the stirring device can quickly stir the pulp inside the cup, the pulp is quickly discharged to the outside under the action of the stirring device, and the impurities in the pulp will roll irregularly with the stirring device to prevent the impurities from falling into the filter member and blocking the filter member, and thus the speed and effect of discharging the pulp are ensured. If the first preset rotation speed is relatively low, it will reduce the stirring effect to the pulp inside the cup, reduce the speed of discharging the pulp, and cannot stir the first impurities in the pulp, and this causes the first impurities in the pulp to block the filter member, and prolongs the entire time of discharging the pulp. If the first preset rotation speed is relatively high, firstly it will increase the power consumption of the stirring device and increase the operating cost, and secondly, it will increase the noise generated during the stirring of the stirring device.

Furthermore, the value range of the first preset rotation speed is 7000 r/min to 15000 r/min.

Understandably, the value range of the first preset rotation speed is disposed to be 7000 r/min to 15000 r/min, and the stirring device stirs the pulp quickly, firstly, this can expedite the discharging speed of the pulp and the pulp is discharged quickly to the outside, and secondly, the pulp in the food processor is in an irregular rolling state under the action of the stirring device, which cannot block the filter member, ensures the filtering effect of the pulp and further improves the discharging speed of the pulp. If the first preset rotation speed is low, the stirring device cannot stir the pulp in the food processor, this causes the pulp in the food processor to gather at the filter member and block the filter member, and the discharging speed of the pulp is reduced and the filtering effect of the pulp is reduced. If the first preset rotation speed is too high, it will increase the power consumption of the stirring device, increase the cost in use, and further increase the noise during stirring of the stirring device.

In any of the above embodiments, furthermore, before Step 104, the control method further comprises:
Step 105: controlling the stirring device to stir for a second preset duration.

In the embodiment, the control device of the food processor controls the stirring device to continuously stir the cleaning medium inside the cup within the second preset duration, and the first impurities inside the cup is removed by the cleaning medium and are blended with the cleaning medium; when the cleaning medium is discharged, the first impurities can be discharged together, and the first impurities remaining in the cup are discharged first, which facilitates the subsequent cleaning operation of the cup, and under the action of the stirring device, the speed of discharging the cleaning medium can be accelerated, the cleaning medium in the cup is quickly discharged, and thus the efficiency is improved.

Understandably, if the second preset duration is relatively short, the stirring device cannot fully stir the cleaning medium, which is not conducive to removing the first impurities and the second impurities remaining on the filter member and the inner wall of the cup, and the cleaning effect cannot be guaranteed. If the second preset duration is relatively long, it will increase the power consumption of the stirring device, and the operating cost is increased.

It should be indicated that the stirring device injects the cleaning medium into the cup for the first time when the cleaning medium is injected into the cup for the first time, that is, after the food processor discharges the pulp, the control device controls the stirring device to run at the first preset rotation speed within the first preset duration. Understandably, after the food processor discharges the pulp to the outside, there will be a large amount of pulp impurities in the cup, at the moment, the cleaning medium is injected into the cup for the first time, and the control device controls the stirring device to perform the stirring operation. Under the stirring of the stirring device, the cleaning medium removes the main first impurities and a portion of the second impurities from the cup, allowing them to blend with the cleaning medium, and then, when the cleaning medium is discharged, the impurities are discharged together to the outside, and thus, most of the impurities in the cup are removed, and this helps the following operation of further cleaning the impurities in the cup.

The food processor provided by an embodiment of the present application further comprises a heating member. As shown in FIG. 2, after Step 104, the control method for a food processor provided by the embodiment of the present application further comprises:
Step 202: controlling the switch member to close the first flow channel and the second flow channel and injecting the cleaning medium into the cup once again;
Step 204: controlling a heating member to heat to a first target temperature and controlling the stirring device to conduct a stirring operation; and
Step 206: controlling the switch member to open the first flow channel and/or the second flow channel, to discharge the cleaning medium from the cup.

In the embodiment, the food processor further comprises the heating member, and the heating member can heat the pulp or the cleaning medium in the cup. When the heating member heats the cleaning medium, the temperature of the cleaning medium can be raised to a designated temperature, the high temperature cleaning medium can help remove the impurities remained on the inner wall of the cup, assist the stirring device to stir the high temperature cleaning medium and can further clean the impurities in the cup.

Furthermore, when the cleaning medium injected into the cup for the first time is discharged, the cleaning medium of a second preset capacity is injected into the cup for the second time, the control device controls the stirring device to start to stir the cleaning medium injected for the second time in the cup and clean the second impurities on the inner wall of the cup and the filter member which easily fall off, i.e., the impurities in the cup are cleaned for the first time, and the possibly remaining first impurities and the second impurities which easily fall off are removed first, and this is a preparation for the following cleaning to the impurities adhered to the inner wall of the cup and the filter member.

Furthermore, the cleaning medium of a third preset capacity can be injected into the cup for the third time, and meanwhile, the control device controls the heating member to start, the heating member heats the cleaning medium inside the cup and heats it to the first target temperature, and the cleaning medium can soften the impurities on the inner wall of the cup and at the filter member, and thus the impurities can fall off more easily. The stirring device stirs the cleaning medium and the cleaning medium creates a vortex inside the cup, as the impurities are softened under the action of temperature and become falling off easily, under the impact of the cleaning medium, the impurities are washed off and blended with the cleaning medium, and the impurities on the inner wall of the cup and the filter member are removed, i.e., the impurities inside the cup are cleaned for the second time. Meanwhile, the first impurities inside the cup can further be separated into the second impurities under the high temperature and the impact of the cleaning medium. After the continuous stirring of the stirring device for a period of time, the control device controls the stirring device to stop the stirring operation, and controls the switch member to open the first flow channel and/or the second flow channel, then the cleaning medium is discharged to the outside through the first flow channel and/or the second flow channel, and furthermore, the cleaning operation of the cup is accomplished.

And the cleaning medium of the third preset capacity can be less than a half of the volume of the cup.

Understandably, as the impurities generated after cleaning the cup are mainly the second impurities and the volume of the second impurity is less than the volume of the filter hole in the filter member, no matter the first flow channel is opened or the second flow channel is opened, the remained impurities in the cup can be discharged, and apparently, when both the first flow channel and the second flow channel are opened simultaneously, the efficiency and effect of discharging the cleaning medium and the impurities are better.

Furthermore, the value range of the first target temperature can be 70 °C to 80 °C.

Understandably, the value range of the first target temperature is disposed to be 70°C to 80°C, thus the impurities can be effectively softened, this makes the impurities on the inner wall of the cup and at the filter member fall off more easily, the effect of removing the impurities is ensured, i.e., the cleaning effect is ensured. If the first target temperature is too low, it is not conducive to the softening of the impurities, and thus some impurities will still remain in the cup, the effect of removing the impurities is reduced. The first target temperature should not be too high, as it will cause continuous operation of the heating member, increase the operating power of the heating member and increase the energy consumption of the heating member in use, and is not conducive to reducing the cost of use. Therefore, in order to balance the falling off effect of the impurities and the energy consumption, the value range of the first target temperature is set to be 70 °C to 80 °C.

In any of the above embodiments, between Step 202 and Step 204, the control method provided in the embodiment of the present application can further comprise:
Step 203: controlling the stirring device to stir for a third preset duration.

In the embodiment, after injecting the cleaning medium into the cup for the second time, the stirring device is controlled to rotate within the third preset duration; through reasonably disposing the third preset duration, the stirring device can continuously stir the cleaning medium, and the cleaning medium can continuously clean the impurities inside the cup, and this helps ensure the cleaning effect inside the cup.

It needs to be understood that after controlling the stirring device to stir for the third preset duration, the cleaning medium can be injected into the cup for the third time, and the cleaning medium inside the cup is sufficient, and in the following process of heating and stirring the cleaning medium, the sufficient cleaning medium washes the cup wall of the cup, and a better cleaning effect is achieved.

Furthermore, the value range of the third preset duration is 30S to 60S.

Understandably, the value range of the third preset duration is set to be 30S to 60S, and the stirring device thoroughly stirs the cleaning medium, and thus the removing effect of the cleaning medium to the impurities in the cup is ensured. If the first preset duration is relatively short, the stirring device cannot fully stir the cleaning medium, which is not conducive to removing the impurities remaining on the filter member and the inner wall of the cup, and thus the cleaning effect cannot be guaranteed. If the third preset duration is relatively long, it will increase the power consumption of the stirring device and increase the cost of use. Therefore, the value range of the third preset duration is set to be between 30S and 60S, which ensures the cleaning effect and meanwhile saves the energy consumption of the stirring device in use.

Furthermore, the stirring device can continuously or intermittently stir during stirring.

Understandably, when the control device controls the above stirring device to perform the stirring operation, the stirring device can continuously or intermittently stir. When the stirring device continuously stirs the cleaning medium inside the cup, it can keep the cleaning medium swirling, and the cleaning medium can continuously impact the impurities adhered to the inner wall of the cup and the filter member, and then the removing effect of the impurities is improved and the cleaning effect of the cup is ensured. When the stirring device intermittently stirs the cleaning medium inside the cup, it can prevent the cleaning medium from overflowing the cup, and the intermittent operation of the stirring device can reduce power consumption and lower user's use cost.

After Step 104 or after Step 206, the control method for a food processor provided in an embodiment of the present application further comprises:
Step 208: executing a first cleaning process N times, and N is a positive integer.

And the above Step 208 comprises:
Step 208a: controlling the switch member to close the first flow channel and the second flow channel and injecting the cleaning medium into the cup once again;
Step 208b: controlling the stirring device to conduct the stirring operation; and
Step 208c: controlling the switch member to open the first flow channel and/or the second flow channel, to discharge the cleaning medium from the cup.

It should be noted that the first cleaning process mentioned above can be executed after the cleaning medium is injected into the cup for the first time, then stirred and discharged, and can further be executed after the cleaning medium is injected into the cup for the second time, then heated, stirred and discharged. The executing order can be set according to the user's setting or actual situations.

In the design, after discharging the cleaning medium from the cup, the first cleaning process is executed once again, and the number of the executing times of the first cleaning process is N, and N is a positive integer, executing the first cleaning process for N times in a cyclical way can ensure the effect of removing the impurities from the cup. The number of the executing times of the first cleaning process mentioned above can be set by default according to user needs, or selected by the user based on the impurities remained in the cup.

Furthermore, the above first cleaning process comprises that the control device of the food processor controls the switch member to close the first flow channel and the second flow channel to prevent the cleaning medium from flowing out of the first flow channel and the second flow channel. The cleaning medium is injected into the cup, and meanwhile, the control device of the food processor controls the stirring device to start to stir the cleaning medium, and the cleaning medium forms a vortex and removes the impurities on the inner wall of the cup and the filter member, and then the cleaning of the cup is achieved. After the stirring device continues stirring for a period of time, the control device stops the stirring of the stirring device, the control device of the food processor controls the switch member to open the first flow channel and/or the second flow channel to discharge the cleaning medium to the outside, to complete the execution of the first cleaning process.

Exemplarily, after the cleaning medium in the cup is discharged, the first cleaning process is executed for three times. At the moment, the food processor begins to execute the first cleaning process, the control device of the food processor controls the switch member to close the first flow channel and the second channel, and injects the cleaning medium into the cup, and at the same time, the control device of the food processor controls the stirring device to operate and conduct the stirring operation to the cleaning medium inside the cup, and the cleaning medium forms a vortex to remove the impurities on the inner wall of the cup and the filter member, and then the cleaning of the cup is achieved. After the stirring device continues stirring for a period of time, the stirring operation of the stirring device is stopped, the control device of the food processor controls the switch member to open the first flow channel and/or the second flow channel to discharge the cleaning medium mixed with the impurities to the outside to complete the cleaning of the cup and complete the first cleaning process. The above process is the steps for executing the first cleaning process once, and the steps of the first cleaning process is repeated twice to complete the instruction of executing the first cleaning process three times. It should be noted that the greater the number N of the executing times of the first cleaning process is, the better the cleaning effect to the cup is, and a user can change the value of N accordingly based on the amount of the impurities in the cup and the expected cleaning level of the cup.

It should be noted that the impurities generated after cleaning the cup are mainly the second impurities, and the volume of the second impurity is less than the volume of the filter hole in the filter member, and therefore, no matter the first flow channel is opened or the second flow channel is opened, the impurities remained on the cup can be discharged, and apparently, when the first flow channel and the second flow channel are opened simultaneously, the efficiency and the effect of discharging the cleaning medium are better.

It can be understood that the cleaning effect inside the cup can be improved by running the first cleaning process for N times, and the amount of the impurities inside the cup is reduced significantly, the cleaning degree of the cup is improved, and the user's use requirements are met.

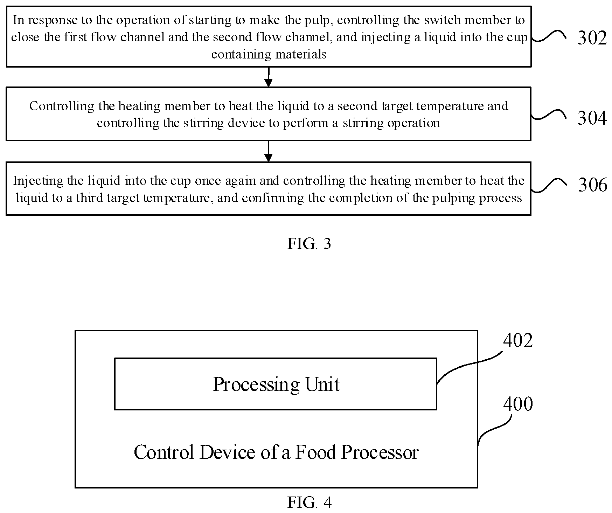

As shown in FIG. 3, for the control method for a food processor provided in the present application, prior to Step 101, the above method further comprises:
Step 302: in response to the operation of starting to make the pulp, controlling the switch member to close the first flow channel and the second flow channel, and injecting a liquid into the cup containing materials;
Step 304: controlling the heating member to heat the liquid to a second target temperature and controlling the stirring device to perform a stirring operation; and
Step 306: injecting the liquid into the cup once again and controlling the heating member to heat the liquid to a third target temperature, and confirming the completion of the pulping process.

In the embodiment, the pulping process can be divided into three working stages, and the pulping process is accomplished through the three working stages, and the three working stages are as follows.

In the first working stage, the control device of the food processor responds to the instruction of starting to make the pulp and controls the switch member to close the first flow channel and the second flow channel to prevent the liquid to be injected from flowing out of the first flow channel and the second flow channel; after the first flow channel and the second flow channel are closed, the liquid is injected into the cup containing the materials, and the materials are mixed with the liquid, and this makes a preparation for the pulping. In the second working stage, the control device of the food processor controls the heating member to heat the liquid in the cup to the second target temperature, this causes the temperature of the liquid to rapidly rise, and at the same time, the stirring device is controlled to conduct stirring operation and stir the materials and the liquid in the cup, and the materials and the liquid are fully blended and the pulp and the materials are matured.

In the third working stage, the control device of the food processor controls the stirring device to continuously stir for a period of time, then the liquid is injected into the cup once again, and the pulp reaches an appropriate concentration, and the heating member is controlled to continue heating the liquid in the cup and heat the liquid in the cup to the third target temperature. When the temperature of the liquid in the cup reaches the third target temperature, the pulping is completed, and the pulping process ends

Through the three pulping stages, the pulping operation is accomplished. In the first stage of pulping, the liquid is injected into the cup containing the materials, and the materials are blended with the liquid to make the preparation of the pulping. In the second stage of pulping, the materials and the liquid are heated and thoroughly stirred, and the materials and the liquid are fully blended to form a matured pulp. In the third stage of pulping, the liquid is added to the cup once again to dilute the pulp, and the concentration of the pulp is suitable for users to drink, and thus the drinking taste of the pulp is improved, and the effect of pulping is ensured.

Furthermore, the value range of the second target temperature is greater than or equal to 95°C.

Understandably, disposing the value range of the second target temperature to be greater than or equal to 95 °C can effectively soften the materials, and the materials are fully blended with the liquid under the action of the stirring device, and this ensures the formation of the pulp, and improves the efficiency and effect of the pulping. If the second target temperature is too low, it does not help the fully blending of the materials and the fluid, and increases the duration of the blending of the materials and the fluid, and prolongs the overall pulping duration. Thus, the value range of the second target temperature is disposed to be greater than or equal to 95°C.

Furthermore, the value range of the third target temperature is 100 °C.

Understandably, the value range of the third target temperature is disposed to be 100°C, at the moment, the pulp inside the cup is heated to boil, and the boiling pulp can quickly be blended with the injected liquid to dilute the concentration of the pulp and the concentration of the pulp is reduced to be suitable for users to drink.

In any of the above embodiments, between Step 302 and Step 304, the above control method further comprises Step 303.

Step 303: controlling the stirring device to operate intermittently at a second preset rotation speed.

In the embodiment, before controlling the heating member to heat the liquid in the cup to the second target temperature, the stirring device is controlled to operate intermittently at the second preset rotation speed, firstly, it can ensure sufficient stirring of the liquid inside the cup, and the liquid is fully blended with the materials, and secondly, it can reduce the power consumption of the stirring device and lower users' use cost.

The embodiment of the present application further provides a control device of a food processor. And the food processor comprises the cup, the cup communicates with the first flow channel and the second flow channel, and the liquid in the cup can be discharged to the outside through the first flow channel and the second flow channel. The first flow channel and the second flow channel are further provided with the switch member, and the switch member can open or close the first flow channel and the second flow channel. And the filter member is provided on the flow path of the first flow channel, the filter member can filter the fluid flowing through the first flow channel, and the impurities in the liquid is separated from the liquid, and the filtering function to the liquid is achieved. The cup is provided with the stirring deice, and the stirring device can conduct the stirring operation.

As shown in FIG. 4, a control device 400 of the above food processor comprises:
a processing unit 402 for controlling the switch member to close the second flow channel and open the first flow channel to allow communication between the cup and the outside to discharge the pulp from the cup in the case that the pulping process is finished;
the processing unit 402 is further configured for injecting the cleaning medium into the cup, controlling the stirring device to perform stirring operation, and controlling the switch member to open the first flow channel and the second flow channel, to discharge the cleaning medium from the cup.

The control device of a food processor provided by the present embodiment is used for a food processor, and the food processor comprises the cup, the first flow channel, the second flow channel, the switch member, the filter member and the stirring device. And the first flow channel and the second flow channel communicate with the cup, and the liquid in the cup can be discharged to the outside through the first flow channel and the second flow channel. The switch member is provided at the first flow channel and the second flow channel, and can open or close the first flow channel and the second flow channel. The filter member is provided at the first flow channel, and the filter member can filter the fluid flowing through the first flow channel, to prevent the impurities in the fluid from being directly discharged through the first flow channel and affecting the taste of the pulp. The stirring device is provided inside the cup and can stir the liquid inside the cup.

In an embodiment, when the execution of the pulping process of the food processor is finished, the control device of the food processor controls the switch member to close the second flow channel and open the first flow channel, and the pulp can be discharged through the first flow channel to the outside. When the pulp flows through the filter member at the first flow channel, the filter member will separate the impurities in the pulp from the pulp, the remaining amount of the impurities in the pulp is reduced, and the drinking taste of the pulp is improved.

Furthermore, when the pulp in the cup is completely discharged to the outside, the control device of the food processor controls the switch member to close the first flow channel and thee second flow channel, and injects the cleaning medium into the cup; the cleaning medium can remove the impurities adhered to the inner wall of the cup and the filter member, and the impurities are blended with the cleaning medium, and the impurities in the cup can be removed under the action of the cleaning medium, this is beneficial for subsequent cleaning operations of the cup and achieves the removal of the impurities in the cup. Furthermore, the control device of the food processor controls the switch member to open the second flow channel, or open both the first flow channel and the second flow channel, and it should be indicated that the second flow channel is not provided with the filter member, and thus opening the second flow channel can discharge the impurities and the cleaning medium smoothly to the outside; or both the first flow channel and the second flow channel are opened, and this will expedite the discharging of the cleaning medium, and shorten the discharging duration of the cleaning medium, and thus, the cleaning medium is discharged to the outside, and the cleaning operation for the cup is achieved.

The control method for a food processor provided by the present application can improve the drinking taste of the pulp by filtering the pulp and separating the pulp from the impurities. At the same time, by injecting the cleaning medium into the cup, the impurities remaining in the cup and at the filter member are removed by the cleaning medium, a self-cleaning function of the cup with the filter member is achieved, the incomplete cleaning of the cup due to the arrangement of filter member and the need for the further operation of manually cleaning the impurities in the cup are avoided, and the cleaning efficiency and the cleaning effect are improved.

Furthermore, when the cleaning medium is injected into the cup, a spraying device can be configured to spray the medium into the cup, or the cleaning medium can further be injected into the cup through an ordinary injecting method.

In any of the above embodiments, the processing unit is configured for controlling the switch member to close the first flow channel and the second flow channel and injecting the cleaning medium into the cup once again; controlling a heating member to heat to a first target temperature and controlling the stirring device to conduct the stirring operation; and controlling the switch member to open the first flow channel and the second flow channel to discharge the cleaning medium from the cup.

In the embodiment, the food processor further comprises the heating member, and the heating member can heat the pulp or the cleaning medium in the cup. When the heating member heats the cleaning medium, the temperature of the cleaning medium can be raised to a designated temperature, the high temperature cleaning medium can help remove the impurities remained on the inner wall of the cup, assist the stirring device to stir the high temperature cleaning medium and can further clean the impurities in the cup. Furthermore, when the cleaning medium injected into the cup for the first time is discharged, the cleaning medium is injected into the cup for the second time, the processing unit controls the stirring device to start to stir the cleaning medium injected for the second time in the cup and clean the impurities on the inner wall of the cup and the impurities at the filter member which easily fall off, i.e., the impurities in the cup are cleaned for the first time, and the large impurities and the impurities which easily fall off are removed first, and this is a preparation for the following cleaning to the impurities adhered to the inner wall of the cup and the filter member.

Furthermore, the cleaning medium is injected into the cup for the third time, and meanwhile, the processing unit controls the heating member to start, the heating member heats the cleaning medium inside the cup and heats it to the first target temperature, and the cleaning medium can soften the impurities on the inner wall of the cup and at the filter member, and thus the impurities can fall off more easily. The stirring device stirs the cleaning medium and the cleaning medium creates a vortex inside the cup, as the impurities are softened under the action of temperature and becomes falling off easily, under the impact of the cleaning medium, the impurities are washed off and blended with the cleaning medium, and the impurities on the inner wall of the cup and at the filter member are removed, i.e., the impurities inside the cup are cleaned for the second time. After the continuous stirring of the stirring device for a period of time, the processing unit controls the stirring device to stop the stirring operation, and controls the switch member to open the first flow channel and the second flow channel, then the cleaning medium is discharged to the outside through the first flow channel and the second flow channel, and furthermore, the cleaning operation is accomplished.

Understandably, the value range of the first target temperature is disposed to be 70 °C to 80 °C, thus the impurities can be effectively softened, this makes the impurities on the inner wall of the cup and at the filter member fall off more easily, the effect of removing the impurities is ensured, i.e., the cleaning effect is ensured. If the first target temperature is too low, it is not conducive to the softening of the impurities, and thus some impurities will still remain in the cup, the effect of removing the impurities is reduced. The first target temperature should not be too high, as it will cause continuous operation of the heating member, increase the operating power of the heating member and increase the energy consumption of the heating member in use, and is not conducive to reducing the cost of use. Therefore, in order to balance the falling off effect of the impurities and the energy consumption, the value range of the first target temperature is set to be 70 °C to 80 °C.

In any of the above embodiments, the processing unit 402 is further configured to execute a first cleaning process N times, and N is a positive integer.

And the first cleaning process comprises: controlling the switch member to close the first flow channel and the second flow channel and injecting the cleaning medium into the cup once again; controlling the stirring device to conduct the stirring operation; and controlling the switch member to open the first flow channel and the second flow channel, to discharge the cleaning medium from the cup.

It should be noted that the first cleaning process mentioned above can be executed after the cleaning medium is injected into the cup for the first time, then stirred and discharged, and can further be executed after the cleaning medium is injected into the cup for the second time, then heated, stirred and discharged. The executing order can be set according to the user's setting or actual situations.

In the embodiment, after discharging the cleaning medium from the cup, the first cleaning process is executed once again, and the number of the executing times of the first cleaning process is N, and N is a positive integer, executing the first cleaning process for N times in a cyclical way can ensure the effect of removing the impurities from the cup. The number of the executing times of the first cleaning process mentioned above can be set by default according to user needs, or selected by the user based on the impurities remained in the cup.

Furthermore, the above first cleaning process comprises that the processing unit of the food processor controls the switch member to close the first flow channel and the second flow channel to prevent the cleaning medium from flowing out of the first flow channel and the second flow channel. The cleaning medium is injected into the cup, and meanwhile, the processing unit of the food processor controls the stirring device to start to stir the cleaning medium, and the cleaning medium forms a vortex and removes the impurities on the inner wall of the cup and at the filter member, and then the cleaning of the cup is achieved. After the stirring device continues stirring for a period of time, the control device stops the stirring of the stirring device, the processing unit of the food processor controls the switch member to open the first flow channel and the second flow channel to discharge the cleaning medium to the outside, to complete the execution of the first cleaning process.

Exemplarily, after the cleaning medium in cup is discharged, the first cleaning process is executed for three times. At the moment, the food processor begins to execute the first cleaning process, the processing unit of the food processor controls the switch member to close the first flow channel and the second channel, and injects the cleaning medium into the cup, and at the same time, the processing unit of the food processor controls the stirring device to operate and conduct the stirring operation to the cleaning medium inside the cup, and the cleaning medium forms a vortex to remove the impurities on the inner wall of the cup and at the filter member, and then the cleaning of the cup is achieved. After the stirring device continues stirring for a period of time, the stirring operation of the stirring device is stopped, the processing unit of the food processor controls the switch member to open the first flow channel and the second flow channel to discharge the cleaning medium mixed with the impurities to the outside to complete the cleaning of the cup and complete the first cleaning process. The above process is the steps for executing the first cleaning process once, and the steps of the first cleaning process is repeated twice to complete the instruction of executing the first cleaning process three times.

It can be understood that the cleaning effect inside the cup can be improved by running the first cleaning process for N times, and the amount of the impurities inside the cup is reduced significantly, the cleaning degree of the cup is improved, and the user's use requirements are met.

The sixth embodiment of the present application provides a computer readable storage medium, a program or instruction is stored in the computer readable storage medium, and when the program or instruction is executed by a processor, the steps of the control method for a food processor of any possible design in the first aspect are achieved. Therefore, the computer readable storage medium has all the beneficial effects of the control method for a food processor of any possible design in the first aspect.

And the computer readable storage medium can be a read only memory (ROM), a random access memory (RAM), a magnetic disk or an optical disc, etc.

The embodiment of the present application further provides a food processor, comprising: the control device of a food processor in the second aspect; and/or the computer readable storage medium provided in the third aspect, and therefore, it has all the beneficial effects of the control device of a food processor in the second aspect and/or the computer readable storage medium in the third aspect, which are not repeated herein.

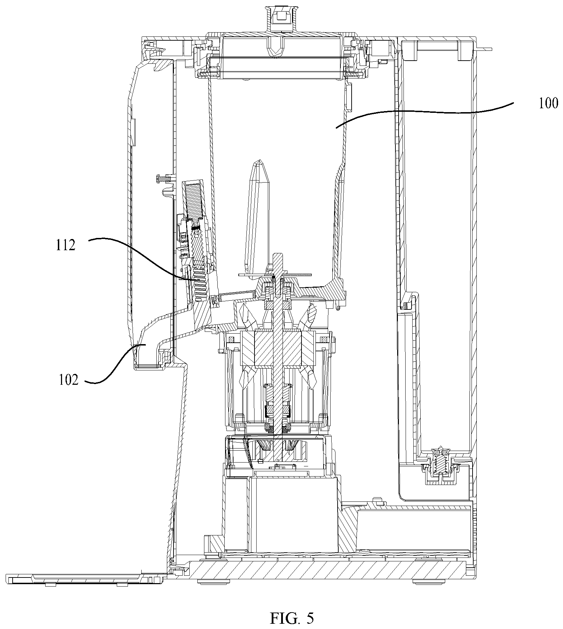

As shown in FIG. 5 to FIG. 12, the embodiment of the present application provides a food processor, which can achieve the control method for a food processor provided in the first aspect, and the food processor comprises: a cup 100, and a second draining port 106 and a first draining port 104 are provided on the cup 100; a draining pipe 102, and the second draining port 106 and/or the first draining port 104 can communicate with the draining pipe 102, a first flow channel 108 is formed when the first draining port 104 communicates with the draining pipe 102, and a second flow channel 110 is formed when the second draining port 106 communicates with the draining pipe 102; a switch member 112 can conduct or block the communication between the first draining port 104 and/or the second draining port 106 with the draining pipe 102; and a filter member 114, provided on the flow path of the first flow channel 108.

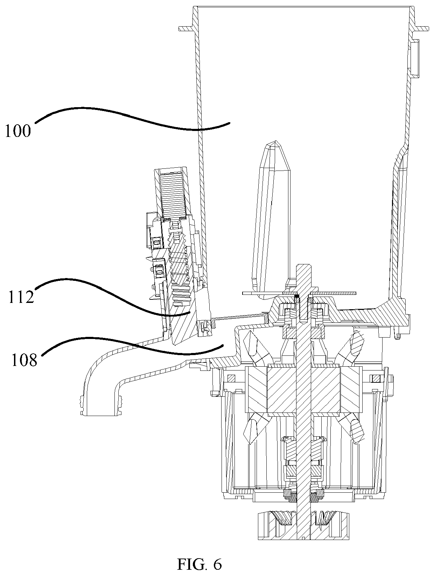

As shown in FIG. 6 to FIG. 8, the food processor comprises the cup 100, the draining pipe 102, the switch member 112 and the filter member 114. And the cup 100 is provided with the first draining port 104 and the second draining port 106, and the liquid in the cup 100 can be discharged to the outside through the first draining port 104 and the second draining port 106.

Furthermore, the draining pipe 102 communicates with the first draining port 104 and/or the second draining port 106; when the draining pipe 102 communicates with the first draining port 104, the draining pipe 102 and first draining port 104 form the first flow channel 108, and the liquid in the cup 100 can be discharged to the outside through the first flow channel 108. When the draining pipe 102 communicates with the second draining port 106, the draining pipe 102 and the second draining port 106 form the second flow channel 110, and the liquid in the cup 100 can be discharged to the outside through the second flow channel 110. And the filter member 114 is provided on the flow path of the first flow channel 108, and the filter member 114 can filter the liquid flowing through the first flow channel 108, and separate the impurities from the liquid, and thus the filtering of the pulp is achieved.

Exemplarily, when the food processor completes executing the pulping process and needs to discharge the pulp, the pulp is discharged through the first flow channel 108; when the pulp flows through the filter member 114 at the first flow channel 108, the filter member 114 separates the impurities from the liquid, the impurities in the liquid are left in the cup 100, the amount of the impurities in the discharged pulp is decreased, and furthermore, the filtering effect of the pulp is ensured and the drinking taste of the pulp is achieved. When the food processor completes the cleaning process, the cleaning medium is discharged through the first flow channel 108 and/or second flow channel 110, the impurities mixed in the cleaning medium can be discharged, the impurities remained in the cup 100 is decreased, and the cleaning effect of the cup 100 is improved.

Furthermore, the food processor is further provided with a switch member 112, the switch member 112 can conduct or block the first draining port 104 and/or the second draining port 106, and the communication between the first draining port 104 and/or the second draining port 106 with the draining pipe 102 is switched, and the switch member 112 further controls whether the liquid in the cup 100 can be discharged through the first draining port 104 and/or the second draining port 106.

In an embodiment, the switch member 112 can be provided on the draining pipe 102.

In any of the above embodiments, the food processor further comprises: a support pipe 116, and the draining pipe 102 communicates with the support pipe 116, the switch member 112 is movable within the support pipe 116; and when the switch member 112 moves to a first position, the second flow channel 110 and the first flow channel 108 are blocked from communicating with the outside; when the switch member 112 moves to a second position, the first flow channel 108 communicates with the outside, the communication between the second flow channel 110 and the outside is blocked; when the switch member 112 moves to a third position, the first flow channel 108 and the second flow channel 110 communicate with the outside.

As shown in FIG. 5 to FIG. 7, in the embodiment, the support pipe 116 communicates with the draining pipe 102, the switch member 112 can do reciprocating motion inside the support pipe 116 to conduct or block the first flow channel 108 and the second flow channel 110. When the switch member 112 moves to the first position inside the support pipe 116, both the first flow channel 108 and the second flow channel 110 are blocked from communicating with the outside, and the liquid inside the cup 100 cannot be discharged to the outside through the first flow channel 108 and the second flow channel 110. In general, in the case that both the first flow channel 108 and the second flow channel 110 are blocked from communicating with the outside, the food processor may be in the pulping stage or in the stage of using the cleaning medium to wash the cup 100, then the pulp or the cleaning medium are kept inside the cup 100 and do not leak out of the outside portion of the cup 100.

Furthermore, when the switch member 112 moves to the second position inside the support pipe 116, the first flow channel 108 communicates with the outside, the communication between the second flow channel 110 and the outside is blocked by the switch member 112, and at the moment, the liquid in the cup 100 can only be discharged to the outside through the first flow channel 108. Generally, in the case that the first flow channel 108 communicates with the outside and the communication between the second flow channel 110 and the outside is blocked by the switch member 112, the food processor may be in a stage of discharging the pulp, and then, the prepared pulp needs to be filtered through the filter member 114 in the first flow channel 108 and is discharged out of the cup 100 of the food processor.

Furthermore, when the switch member 112 moves to the third position inside the support pipe 116, both the first flow channel 108 and the second flow channel 110 communicate with the outside, and then, the liquid in the cup 100 can be discharged to the outside through the first flow channel 108 and the second flow channel 110. Generally, in the case that both the first flow channel 108 and the second flow channel 110 communicate with the outside, the food processor may be in a cleaning stage in which the cleaning medium mixed with the impurities are discharged.

It can be understood that the communicating state of the first flow channel 108 and the second flow channel 110 with the outside can be controlled through the moving of the switch member 112 inside support pipe 116, and the food processor can select different flow channels to discharge the liquid when executing different program instructions, and thus the functionality of the food processor is improved.

In any of the above embodiments, the draining pipe 102 communicates with the second draining port 106, the second draining port 106 and the first draining port 104 are arranged successively along the moving direction of the switch member 112, and the first draining port 104 is away from the inlet of the cup 100 compared with the second draining port 106; and when the switch member 112 moves to the first position, the switch member 112 blocks the second draining port 106 and the first draining port 104; when the switch member 112 moves to the second position, the switch member 112 opens the first draining port 104 and blocks the second draining port 106; when the switch member 112 moves to the third position, the switch member 112 opens the second draining port 106 and the first draining port 104.

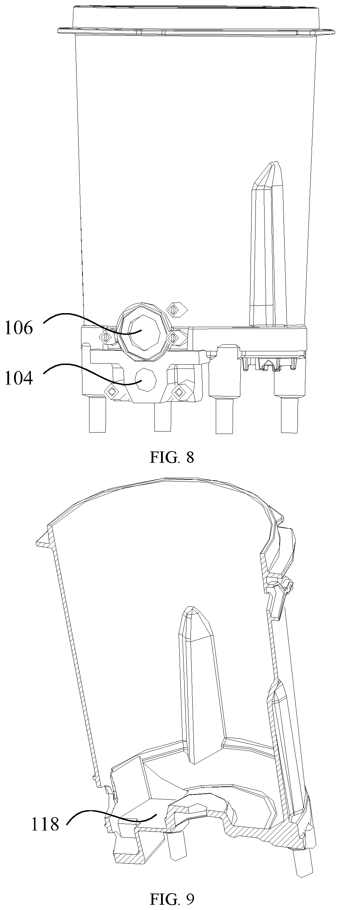

Exemplarily, as shown in FIG. 8, in the embodiment, the second draining port 106 communicates with the draining pipe, 102 the second draining port 106 and the first draining port 104 are arranged successively along the moving direction of the switch member 112, and the position of the second draining port 106 is closer to the inlet of the cup 100 compared with the position of the first draining port 104. Exemplarily, during the process that the switch member 112 moves from top to bottom along the height direction of the cup 100, it first passes through the second draining port 106, and then passes through the first draining port 104. During the process that the switch member 112 moves from bottom to top along the height direction of the cup 100, it first passes through the first draining port 104 and then passes through the second draining port 106.

Furthermore, when the switch member 112 moves to the first position, both the first draining port 104 and the second draining port 106 are blocked from communicating with the outside, the first draining port 104 and the second draining port 106 are blocked from communicating with the draining pipe 102 by the switch member 112, and the first flow channel 108 and the second flow channel 110 are blocked from communicating with the outside, and the liquid in the cup 100 cannot be discharged to the outside through the first draining port 104 and the second draining port 106. When the switch member 112 moves to the second position, the switch member 112 opens the first draining port 104, the first draining port 104 communicates with the draining pipe, and then the first flow channel 108 communicates with the outside; the communication between the second draining port 106 and the outside is blocked by the switch member 112, and at the moment, the liquid inside the cup 100 can only be discharged to the outside through the first draining port 104. When the switch member 112 moves to the third position, both the first draining port 104 and the second draining port 106 communicate with the outside, and at the moment, the first draining port 104 and the second draining port 106 in the cup 100 communicate with the draining pipe 102, and thus the first flow channel 108 and the second flow channel 110 are formed, and the liquid in the cup 100 can be discharged to the outside.

In any of the above embodiments, the food processor further comprises a driving motor, the switch member 112 is connected to the driving motor, and the switch member 112 is driven by the driving motor to move within the support pipe 116.

In the embodiment, the food processor is further provided with the driving motor which is connected to the switch member 112, and the driving motor can drive the switch member 112 to move within the support pipe 116, and the switch member 112 can conduct or block the first flow channel 108 and/or the second flow channel 110, and further control the communication state of the cup 100 with the outside.

In any of the above embodiments, the support pipe 116 is internally provided with a first thread, and the switch member 112 is provided with a second thread compatible with the first thread, and the switch member 112 moves within the support pipe 116 via the second thread.

Exemplarily, as shown in FIG. 5, in the embodiment, the support pipe 116 is internally provided with the first thread, and the switch member 112 is provided with the second thread, the first thread is compatible with the second thread, and the switch member 112 can move or be locked within the support pipe 116 via the second thread. Understandably, through controlling the switch member 112 to rotate in the support pipe 116, a displacement motion of the switch member 112 in the support pipe 116 can be achieved, and furthermore, the switch member 112 can conduct or block the first flow channel 108 and/or the second flow channel 110.

Through providing the first thread and the second thread, the motion of the switch member 112 in the support pipe 116 is more accurate, and the switch member 112 is movable within the support pipe 116 through the threads, then the locking at a designated position can be achieved, and the conducting or blocking effect of the switch member 112 is improved.

Furthermore, the first thread and the second thread can be self-locking threads.

Furthermore, the first thread and the second thread can be anti-loosing threads.

In any of the above embodiments, the bottom portion of the cup 100 protrudes outward to form an accommodating groove 118, and the first draining port 104 is provided in a portion of the cup 100 that forms the accommodating groove 118; the filter member 114 is provided in the accommodating groove 118 and located between the second draining port 106 and the first draining port 104.

Exemplarily, as shown in FIG. 9, FIG. 10 and FIG. 11, in the embodiment, the bottom portion of the cup 100 protrudes outward to form the accommodating groove 118, and the first draining port 104 is provided in a portion of the cup 100 that forms the accommodating groove 118, i.e., at least a portion of the accommodating groove 118 is the first draining port 104. The filter member 114 is provided at the accommodating groove 118, and the accommodating groove 118 can control and fix the filter member 114, and the filter member 114 is fixed at a relative position of the cup 100; when the liquid passes through the filter member 114, it ensures that the filter member 114 is always fixed at the accommodating groove 118.

Furthermore, the filter member 114 is located between the first draining port 104 and the second draining port 106. The large impurities that have been filtered by the filter member 114 can be retained above the filter member 114, and ideally, the large impurities can be located at the second draining port 106. In this way, when the cleaning medium is configured to clean the cup 100, the large impurities can be directly discharged out of the cup 100 through the second draining port 106.

Furthermore, the area of the accommodating groove 118 is greater than that of the first draining port 104, and the liquid in the cup 100 can be filtered sufficiently by the filter member 114 when passing through the filter member 114 provided at the accommodating groove 118, and this can prevent the impurities in the liquid from flowing out directly through the first draining port 104, and the filtration efficiency of the liquid is ensured.

In any of the above embodiments, the food processor further comprises a storage tank 120, the cup 100 communicates with the storage tank 120, and the liquid inside the storage tank 120 can be injected into the cup 100.

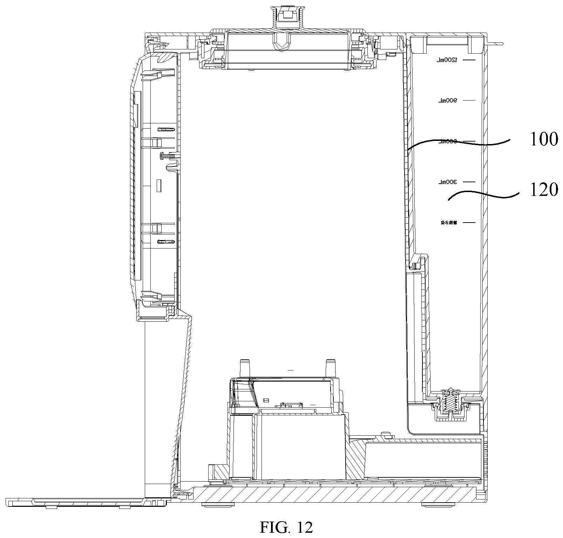

As shown in FIG. 12, in the embodiment, the food processor further comprises the storage tank 120, and the liquid or the cleaning medium is accommodated in the storage tank 120. The storage tank 120 communicates with the cup 100, and the liquid or the cleaning medium in the storage tank 120 can be injected into the cup 100, to meet the use needs of the food processor.

Furthermore, both the liquid and the cleaning medium accommodated in the storage tank are water. The water is injected into the cup from the storage tank and the cup can be cleaned and cooked with water.

Furthermore, the storage tank can further be disposed with two independent accommodating chambers for respectively accommodating the liquid and the cleaning medium. The above liquid can be water, and the cleaning medium can be the liquid mixed with cleaning agents.

In the present application, the phrase of "a plurality of' indicates two or more than two, unless otherwise explicitly specified or defined; the orientation or position relations indicated by the terms of "upper", "lower" and the like are based on the orientation or position relations shown in the accompanying drawings, and are just intended to conveniently describe the present application and simplify the description, and are not intended to indicate or imply that the devices or units as indicated should have specific orientations or should be configured or operated in specific orientations, and then should not be construed as limitations to the present application; the terms of "connection", "mounting", "fixing" and the like should be understood in a broad sense, unless otherwise clearly defined, for example, "connection" may be a fixed connection, and may further be a removable connection, or an integral connection; and may be a direct connection and may further be an indirect connection through an intermediate medium. A person of ordinary skills in the art could understand the specific meanings of the terms in the present application according to specific situations.

In the description of the present specification, the descriptions of the phrases "one embodiment", "some embodiments" and "specific embodiments" and the like mean that the specific features, structures, materials or characteristics described in combination with the embodiment(s) or example(s) are included in at least one embodiment or example of the present application. In the specification, the schematic representation of the above phrases does not necessarily refer to the same embodiment or example. Moreover, the particular features, structures, materials or characteristics described may be combined in a suitable manner in any one or more of the embodiments or examples.

The descriptions above are only some embodiments of the present application, and are not configured to control the present application. For a person skilled in the art, the present application may have various changes and variations. Any modifications, equivalent substitutions, improvements, etc. made within the spirit and principle of the present application shall all be included in the protection scope of the present application.

## Claims

1. A control method for a food processor, wherein:
the food processor comprises a cup, a first flow channel and a second flow channel that are communicated with the cup, and a switch member capable of opening and closing the first flow channel and/or the second flow channel;
a filter member is provided on a flow path of the first flow channel, and a stirring device is provided inside the cup; and
the control method comprises:
when a pulping process is finished, controlling the switch member to close the second flow channel and open the first flow channel to allow communication between the cup and the outside, to discharge the pulp from the cup; and
controlling the switch member to close the first flow channel and the second flow channel, injecting a cleaning medium into the cup, and controlling the switch member to open the second flow channel or controlling the switch member to open the first flow channel and the second flow channel to discharge the cleaning medium from the cup.

2. The control method for a food processor according to claim 1, wherein before discharging the pulp from the cup, the control method further comprises:
controlling the stirring device to operate for a first preset duration at a first preset rotation speed.

3. The control method for a food processor according to claim 1, wherein prior to controlling the switch member to open the second flow channel or controlling the switch member to open the first flow channel and the second flow channel, the method further comprises:
controlling the stirring device to stir for a second preset duration.

4. The control method for a food processor according to claim 1, wherein the food processor further comprises a heating member, and after discharging the cleaning medium from the cup, the method further comprises:
controlling the switch member to close the first flow channel and the second flow channel and injecting the cleaning medium into the cup once again;
controlling a heating member to heat to a first target temperature and controlling the stirring device to conduct a stirring operation; and
controlling the switch member to open the first flow channel and/or the second flow channel, to discharge the cleaning medium from the cup.

5. The control method for a food processor according to claim 4, wherein prior to controlling the heating member to heat to the first target temperature, the method further comprises:
controlling the stirring device to stir for a third preset duration.

6. The control method for a food processor according to any one of claims 1 to 5, wherein, after discharging the cleaning medium from the cup, the method further comprises:
executing a first cleaning process N times, wherein N is a positive integer; and
the first cleaning process comprises:
controlling the switch member to close the first flow channel and the second flow channel and injecting the cleaning medium into the cup once again;
controlling the stirring device to conduct a stirring operation; and
controlling the switch member to open the first flow channel and/or the second flow channel, to discharge the cleaning medium from the cup.

7. The control method for a food processor according to any one of claims 1 to 5, wherein before the pulping process is finished, the method further comprises:
in response to the operation of starting to make the pulp, controlling the switch member to close the first flow channel and the second flow channel, and injecting a liquid into the cup containing materials;
controlling the heating member to heat the liquid to a second target temperature and controlling the stirring device to perform a stirring operation; and
injecting the liquid into the cup once again and controlling the heating member to heat the liquid to a third target temperature, and confirming the completion of the pulping process.

8. The control method for a food processor according to claim 7, wherein before controlling the heating member to heat the liquid to the second target temperature, the method further comprises:
controlling the stirring device to operate intermittently at a second preset rotation speed.

9. A control device of a food processor, wherein:
the food processor comprises a cup, a first flow channel and a second flow channel that are communicated with the cup, and a switch member capable of opening and closing the first flow channel and/or the second flow channel;
a filter member is provided on a flow path of the first flow channel, and a stirring device is provided inside the cup; and
the control device comprises:
a processing unit for controlling the switch member to close the second flow channel and open the first flow channel to allow communication between the cup and the outside to discharge the pulp from the cup when a pulping process is finished,
wherein the processing unit is further configured for injecting a cleaning medium into the cup and controlling the stirring device to conduct a stirring operation, and controlling the switch member to open the first flow channel and the second flow channel to discharge the cleaning medium from the cup.

10. A computer readable storage medium, wherein a program or instruction is stored in the computer readable storage medium, and when the program or instruction is executed by a processor, the steps of the control method for a food processor according to any one of claims 1 to 8 are achieved.

11. A food processor, comprising:
the control device of a food processor according to claim 9; and/or
the computer readable storage medium according to claim 10.

12. A food processor, wherein the food processor comprises:
a cup, wherein the cup is provided with a first draining port and a second draining port;
a draining pipe, capable of communicating with the first draining port and/or the second draining port, wherein a first flow channel is formed when the draining pipe communicates with the first draining port, and a second flow channel is formed when the draining pipe communicates with the second draining port;
a switch member capable of conducting or blocking the communication between the first draining port and/or the second draining port with the draining pipe; and
a filter member, provided on a flow path of the first flow channel.

13. The food processor according to claim 12, wherein:
the food processor further comprises a support pipe, communicating with the draining pipe;
the switch member is movable within the support pipe;
when the switch member moves to a first position, the communication between the first flow channel and the second flow channel and the outside is blocked;
when the switch member moves to a second position, the first flow channel communicates with the outside, the communication between the second flow channel and the outside is blocked; and
when the switch member moves to a third position, the first flow channel and the second flow channel communicate with the outside.

14. The food processor according to claim 13, wherein the second draining port communicates with the draining pipe, the second draining port and the first draining port are arranged successively along the moving direction of the switch member, and the second draining port is closer to the inlet of the cup compared with the first draining port; and
wherein:
when the switch member moves to the first position, the switch member blocks the first draining port and the second draining port;
when the switch member moves to the second position, the switch member opens the first draining port and blocks the second draining port; and
when the switch member moves to the third position, the switch member opens the first draining port and the second draining port.

15. The food processor according to claim 13, wherein the food processor further comprises:
a driving motor, connected to the switch member for driving the switch member to move within the support pipe.

16. The food processor according to claim 13, wherein:
the support pipe is internally provided with a first thread;
the switch member is provided with a second thread compatible with the first thread; and
the switch member moves within the support pipe via the second thread.

17. The food processor according to any one of claims 12 to 15, wherein:
a bottom portion of the cup protrudes outward to form an accommodating groove;
the first draining port is provided in a portion of the cup that forms the accommodating groove; and
the filter member is provided in the accommodating groove and located between the first draining port and the second draining port.

18. The food processor according to any one of claims 12 to 15, wherein the food processor further comprises:
a storage tank communicating with the cup, for injecting a cleaning medium or liquid into the cup.
